**Europäisches Patentamt**

**European Patent Office**

**Office européen des brevets**

(19)

(11) Veröffentlichungsnummer : **0 337 183 B1**

(12)

# EUROPÄISCHE PATENTSCHRIFT

(45) Veröffentlichungstag der Patentschrift :
**17.06.92 Patentblatt 92/25**

(51) Int. Cl.$^5$ : **C14B 7/00**

(21) Anmeldenummer : **89105420.7**

(22) Anmeldetag : **28.03.89**

(54) **Verfahren zur Formgebung von Naturleder.**

(30) Priorität : **09.04.88 DE 3811890**

(43) Veröffentlichungstag der Anmeldung :
**18.10.89 Patentblatt 89/42**

(45) Bekanntmachung des Hinweises auf die
Patenterteilung :
**17.06.92 Patentblatt 92/25**

(84) Benannte Vertragsstaaten :
**DE FR GB IT SE**

(56) Entgegenhaltungen :
**FR-A- 2 372 895**
**FR-A- 2 583 063**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Häuslein, Siegfried
Fröttmaningerstrasse 8c
W-8000 München 40 (DE)**
Erfinder : **Koot, Anthonius
Tölzerstrasse 5
W-8021 Strasslach (DE)**

EP 0 337 183 B1

## Beschreibung

Die Erfindung betrifft ein Verfahren zur Formgebung von Naturleder, insbesondere von Echtleder-Verkleidungen von Formteilen.

Ein bevorzugtes verkleidetes Formteil ist als Kraftfahrzeug-Innenausstattungs- und -Verkleidungsteil im deutschen Gebrauchsmuster 85 23 858 beschrieben; das technologische Umfeld für Lederbearbeitungsverfahren gibt die gattungsbildende DE-OS 21 44 371 wieder.

Formteile werden bislang solchermaßen mit Echtleder verkleidet, das eine zugeschnittene und ggf. in einem Preßwerkzeug unter Einwirkung von Heißdampf vorgeformte Lederstruktur, welche auch aus einzelnen Teilen zusammengenäht sein kann, auf das fertige Formteil aufgeklebt wird. Zum Einsatz kommen dabei geeignete Klebstoffe, ggf. auch auf Polyurethanbasis. Soll dabei am Formteil eine gewisse Exklusivität zum Ausdruck gebracht werden, so wird insbesondere die Narbenseite des Leders verwendet; die darüber hinaus anfallenden minderwertigeren Spaltleder kommen hierfür nur eingeschränkt zum Einsatz. Da die Narbenseite des Leders ohne zusätzliche Oberflächen-Behandlungsmaßnahmen den Vorteil eines naturgetreuen Erscheinungsbildes hat, bezieht sich die vorliegende Erfindung insbesondere auf ein Bearbeitungsverfahren zur Formgebung der Narbenseite von Naturledern; eine Bearbeitung von Spaltleder oder lederähnliche Materialien ist damit jedoch ebenso möglich.

Das oben genannte Verfahren zum Aufbringen von Lederverkleidungen (Handbezug) ist nicht nur äußerst arbeitsaufwendig, sondern liefert darüber hinaus teilweise unbefriedigende Ergebnisse. Aufgrund von Schwunderscheinungen, beispielsweise unter Einwirkung von Sonneneinstrahlung, kann es zu Verwerfungen in der Lederverkleidung kommen. Ferner eignet sich für das bislang übliche Verkleidungsverfahren lediglich ausgewähltes Narbenleder erster Qualität.

Aufgabe der Erfindung ist es, ein hinsichtlich des Arbeitsaufwandes deutlich verbessertes Verfahren zur Formgebung von Naturleder, insbesondere für Echtleder-Verkleidungen von Formteilen aufzuzeigen.

Diese Aufgabe wird durch die kennzeichnenden Merkmale des ersten Anspruchs gelöst; vorteilhafte Weiterbildungen beschreiben die Unteransprüche.

Erfindungsgemäß wird in die Unterseite des Leders eine Polyurethan-Sperrschicht eingepreßt, welche durch Erwärmen und dabei insbesondere durch Erhitzen der Formpreßwerkzeuge reaktiviert wird. Jene sich dabei ausbildende Sperrschicht gibt der an sich relativ dünnen Lederschicht - diese weist eine Dicke von ca. 1,35 mm auf - eine einstellbare Stabilität, wobei gleichzeitig die Oberseite insbesondere der Narbenseite die vorteilhafte bekannte Lederstruktur und Weichheit beibehält. Diese Stabilität ermöglicht eine deutlich vereinfachte Weiterbearbeitung. Vorteilhafterweise lassen sich auf diese Weise auch deutlich kompliziertere Formgebungen erzielen als dies bei den bislang üblichen Lederformgebungsverfahren möglich war; mit dem erfindungsgemäßen Verfahren sind sogar Hinterschneidungen realisierbar. Darüber hinaus weist dieses Verfahren weitere Vorteile auf. Verwerfungen, wie sie sich beispielsweise aufgrund von Schrumpfvorgängen einstellen könnten, sind somit sicher ausgeschlossen. Desweiteren kann wegen der sich mit dem erfindungsgemäßen Verfahren einstellenden Stabilität bei gleichzeitiger Beibehaltung der ledertypischen Oberflächenstruktur auch Leder von älteren Tieren zum Einsatz kommen, welches für das bislang übliche Bearbeitungsverfahren wegen seiner Schwabbeligkeit bzw. Faltigkeit ausgeschlossen war.

Anspruch 2 nennt eine vorteilhafte Dicke der Sperrschicht in Relation zur Gesamtdicke der Lederschicht. Mit dem angegebenen Dickenbereich von ca. 35 % bis 65 % wird zum einen eine ausreichende Stabilität erzielt, zum anderen bleibt die lederspezifische Oberflächenbeschaffenheit voll erhalten. Erzielt wird die entsprechende Sperrschichtdicke dabei derart, daß Viskosität und Menge der vor dem Preßvorgang auf die Unterseite des Leders aufgebrachten Polyurethanschicht entsprechend aufeinander abgestimmt werden. Mit einem bevorzugten 2-Komponenten-PUR-System C 6609/3 der Elastogram Polyurethane GmbH mit dixotroper A-Komponente sowie einer Viskosität der B-Komponente von 200 + 50 mPas hat sich dabei eine Auftragsmenge von 420 g je $m^2$ als optimal erwiesen.

Ein separater Arbeitsgang, in welchem ein nach dem erfindungsgemäßen Verfahren verarbeiteter Lederbezug auf ein Formteil aufgebracht wird, kann ersatzlos entfallen, wenn jenes Formteil direkt im Anschluß an die Sperrschicht hinterschäumt wird. Dieses Verfahren ist äußerst vorteilhaft und weicht völlig von den bislang bekannten Verfahren ab, denn nunmehr wird im ersten Bearbeitungsschritt der Lederbezug vorgeformt und erst im daran anschließenden zweiten Bearbeitungsschritt das jeweils gewünschte Formteil hinterschäumt. Bei jenen Formteilen kann es sich dabei um sämtliche durch Schäumen auszubildende Strukturen handeln; ein bevorzugter Anwendungsfall der Erfindung liegt jedoch in ebenfalls aus Polyurethanschaum hergestellten Kraftfahrzeug-Innenausstattungsteilen, wie beispielsweise der Armaturentafel, dem Handschuhkasten, Türverkleidungsteilen, Sonnenblenden o. ä.

Im folgenden wird die Erfindung anhand einer Prinzipskizze nochmals näher erläutert. Es zeigt:

Fig. 1 als wesentlichen Bearbeitungsvorgang einen Schnitt durch ein Preßwerkzeug mit eingelegter Lederschicht (Narbenseite) mit eingepreßter Polyurethan-Sperrschicht, sowie
Fig. 2 einen deutlich vergrößerten Schnitt durch die Lederschicht (die Narbenseite) mit integrierter Sperrschicht.

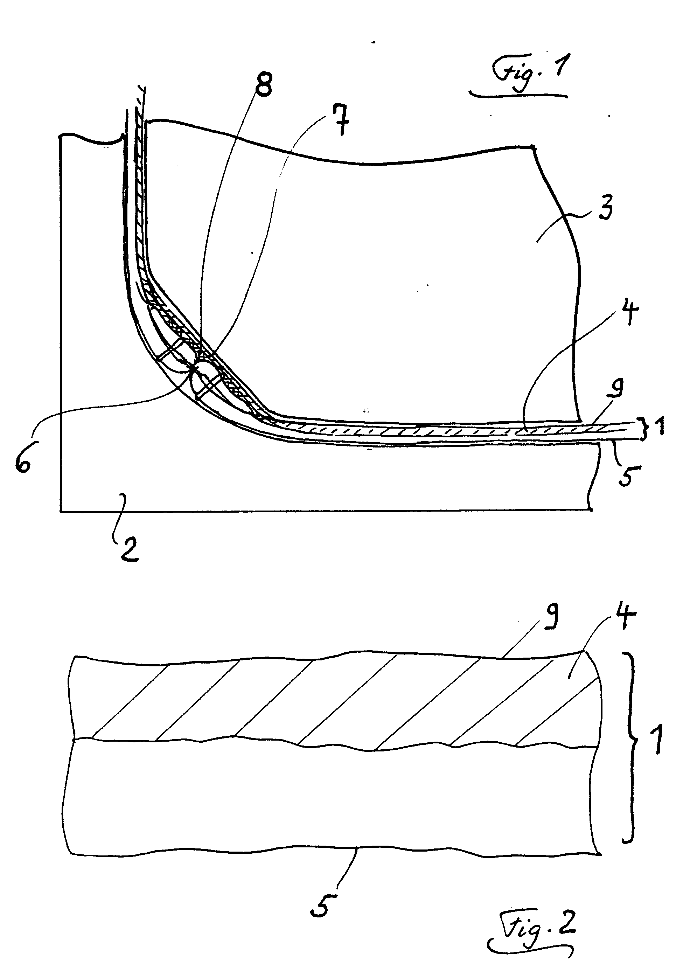

Die Narbenseite 1 eines Naturleders wird in einer aus dem Oberwerkzeug 2 sowie dem Unterwerkzeug 3 bestehenden Formpreßvorrichtung geformt. Dabei wird vor dem Form- und Preßvorgang zwischen Unterwerkzeug 3 sowie der Unterseite 9 der Narbenseite 1 eine definierte Menge einer Polyurethanschicht aufgebracht. Diese Polyurethanschicht dringt während des Preßvorganges bis zu einer gewissen Tiefe in die Lederschicht ein. Durch anschließende Erwärmung von Ober- und Unterwerkzeug 2, 3 auf ca. 80°C wird jene Polyurethanschicht reaktiviert und bildet dabei auf der Abseite (Unterseite 9) des Leders die sogenannte Sperrschicht 4. Die Dicke der Sperrschicht 4 beträgt dabei 35 % bis 65 % der Dicke der Lederschicht, vorzugsweise jedoch ca. 50 %, wie dies in Fig. 2 näher dargestellt ist. Nach dem Preß- und Reaktivierungsvorgang kann die nunmehr auf der Unterseite mit einer Sperrschicht 4 versehene Narbenseite 1 dem Formpreßwerkzeug 2, 3 entnommen werden und zeichnet sich dabei - wie bereits oben erläutert - durch eine gewisse Formstabilität aus bei gleichzeitiger Beibehaltung der lederspezifischen Struktur auf der Oberfläche 5 der Narbenseite 1.

Fig. 1 ist darüber hinaus zu entnehmen, wie das erfindungsgemäße Verfahren im Stoßbereich zweier Lederteile, also im Bereich einer Naht 6 ausgeführt wird. Um ein Durchdringen der die Sperrschicht verursachenden Polyurethanschicht im Nahtbereich 6 zu vermeiden, ist hier zwischen der Unterseite 9 der unbehandelten Narbenseite 1 sowie der vor dem Preßvorgang aufgebrachten Polyurethanschicht 7 eine separate Nahtabdichtung 8 aufgebracht, welche ebenfalls aus einem Polyurethan-Coating ausgebildet sein kann. Da diese Nahtabdichtung 8 jedoch nicht in die unbehandelte Narbenseite 1 eindringt, unterscheidet sich jenes Polyurethan-Coating wesentlich von der eingebrachten erfindungsgemäßen Sperrschicht 4, und ist vielmehr gleichzusetzen mit den bislang üblichen Beschichtungsverfahren für Naturleder. Anstelle jener Nahtabdichtung können jedoch auch Selbstklebestreifen, Filz- oder Lederstreifen o. ä. im Nahtbereich aufgeklebt werden.

Nach Entnahme aus dem Preßwerkzeug 2, 3 kann die so behandelte und mit einer Sperrschicht 4 versehene Narbenseite 1 nunmehr hinterschäumt werden. Dabei wird der Schaumfluß vorteilhafterweise durch die durch die Sperrschicht 4 geglättete Unterseite 9 der Lederschicht (Narbenseite 1) optimiert. Auf diese Weise wird also ausgehend von der fertigen Verkleidung das von dieser Verkleidung umhüllte Formteil hergestellt. Jener Bearbeitungsschritt, welcher figürlich nicht mehr dargestellt ist, ist nur möglich, da das erfindungsgemäße Verfahren eine Lederschicht (Narbenseite 1) eines Naturleders bereitstellt, welche aufgrund ihrer gewissen Formstabilität eine endgültige Form aufweist. Im wesentlichen unbehandelt bleibt bei diesem Verfahren die Oberfläche 5 der Narbenseite 1, so daß qualitativ wertvolle Echtleder-Verkleidungen von Formteilen erzielbar sind.

## Patentansprüche

1. Verfahren zur Formgebung von Naturleder, insbesondere für Echtleder-Verkleidungen von Formteilen, dadurch gekennzeichnet, daß in die Unterseite (9) des Leders eine Polyurethan-Sperrschicht (4) eingepreßt wird, welche durch Erwärmen reaktiviert wird.

2. Verfahren nach Anspruch 1, dadurch gekennzeichnet, daß Viskosität und Menge der vor dem Preßvorgang auf die Unterseite (9) aufgebrachten Polyurethan-Schicht so aufeinander abgestimmt werden, daß die Dicke der Sperrschicht (4) 35 % bis 65 % der Dicke der Lederschicht beträgt.

3. Verfahren nach Anspruch 1 oder 2, dadurch gekennzeichnet, daß zur Erwärmung die Formpreßwerkzeuge (2, 3) erhitzt werden.

4. Verfahren nach einem der vorangegangenen Ansprüche, dadurch gekennzeichnet, daß die Narbenseite (1) des Leders verwendet wird.

5. Verfahren nach einem der vorangegangenen Ansprüche, dadurch gekennzeichnet, daß im Anschluß an die Sperrschicht (4) ein Formteil hinterschäumt wird.

## Claims

1. A method of shaping natural leather, more particularly genuine leather coverings of shaped parts , characterised in that a polyurethane barrier layer (4) reactivated by heating is pressed into the underside (9) of the leather.

2. A method according to claim 1, characterised in that the viscosity and amount of polyurethane layer applied to the underside (9) before the pressing operation are adjusted to one another so that the thickness of the barrier layer (4) is 35 % to 65 % of the thickness of the leather layer.

3. A method according to claim 1 or 2, characterised in that heat is applied by heating the shaping and pressing tools (2, 3).

4. A method according to any of the preceding claims, characterised in that the grain side (1) of the leather is used.

5. A method according to any of the preceding claims, characterised in that a shaped part is foamed behind the barrier layer (4).


**Revendications**

1. Procédé pour mettre en forme du cuir naturel notamment des revêtements de vrai cuir pour des pièces moulées, caractérisé en ce qu'on injecte dans la face inférieure (9) du cuir une couche de barrage de polyuréthane (4) qu'on réactive par chauffage.

2. Procédé selon la revendication 1, caractérisé en ce que la quantité et la viscosité de la couche de polyuréthane déposée sur la face inférieure (9) sont mutuellement adaptées avant le processus de compression de façon à ce que l'épaisseur de la couche de barrage (4) représente 35% à 65% de l'épaisseur de la couche de cuir.

3. Procédé selon la revendication 1 ou 2, caractérisé en ce que pour le réchauffage on réchauffe les outils (2, 3) de formage par compression.

4. Procédé selon l'une des revendications précédentes caractérisé en ce qu'on utilise le côté fleur (1) du cuir.

5. Procédé selon l'une des revendications précédentes, caractérisé en ce qu'en continuité avec la couche de barrage (4) on dépose une mousse en arrière de la pièce moulée.

*Fig. 1*

*Fig. 2*